# EUROPÄISCHE PATENTSCHRIFT

(11) **EP 1 749 590 B1**
(45) Veröffentlichungstag und Bekanntmachung des Hinweises auf die Patenterteilung: **19.11.2008**
(21) Anmeldenummer: 06014192.6
(22) Anmeldetag: 08.07.2006
(51) Int. Cl.: B21C 47/24, B21B 15/00, F16B 11/00

(54) **Verfahren zum Abkleben einer Bandverbindung und Klebebandapplikator**
Process for applying adhesives on a band connection and adhesive tape applicator
Procédé d'application d'adhésifs sur une liaison entre deux bandes et applicateur de ruban adhésif

(30) Priorität: 06.08.2005 DE 102005037182
(43) Veröffentlichungstag der Anmeldung: 07.02.2007
(73) Patentinhaber: BWG BERGWERK- UND WALZWERK-MASCHINENBAU GMBH, D-47051 Duisburg (DE)
(72) Erfinder: Noé, Andreas, 47647 Kerken (DE)
(74) Vertreter: von dem Borne, Andreas

(56) Entgegenhaltungen:
- JP-A- 2 241 616
- JP-A- 7 132 322

## Beschreibung

Die Erfindung betrifft ein Verfahren zum Abkleben einer gestanzten Bandverbindung von zwei miteinander mittels Stanzens verbundenen Metallbandenden.

In Bandprozesslinien werden zu Bunden aufgewickelte Bänder im Einlaufteil abgewickelt, durchlaufen dann verschiedene Behandlungsstationen und werden im Auslaufteil wieder aufgewickelt. Damit die Bänder nicht stets neu eingefädelt werden müssen, wird der Bandanfang eines neuen Bundes mit dem Bandende des letzten Bundes verbunden. Gängige Verfahren zur Verbindung der Bandenden sind bei Metallbändern Stanzverbindungen (Stitchen), Schweißverbindungen aber auch Klebeverbindungen wie auch bei anderen Bändern.

Bei Stanzverbindungen werden die Bandenden überlappend übereinander gelegt und einer Stanzpresse zugeführt. Die Stanzpresse verfügt über ein oberes und ein unteres Stanzwerkzeug. Beide Stanzwerkzeuge sind regelmäßig so ausgeführt, dass bei einem Stanzhub durch beide Bandenden jeweils ein Stanzmuster erzeugt wird. Nach dem Stanzen werden die Stanzmuster miteinander verhakt, indem ein Bandzug zum Beispiel durch einen Auf- oder Abwickelhaspel erzeugt wird. Die Stanzverbindung ist danach für einen sichereren Durchlauf durch die Bandprozesslinie geeignet. Im Auslaufteil werden die auf diese Weise miteinander verbundenen Bänder wieder getrennt und die Stanzverbindung herausgeschnitten. - Derartige Stanzverbindungen werden regelmäßig bei Metallbändern im Dickenbereich von ca. 0,1 bis 5 mm angewendet. Das gilt insbesondere für legierte Metallbänder, die nur schwer oder gar nicht schweißbar sind und bei denen eine Klebeverbindung nicht hinreichend zuverlässig ist. Das gilt zum Beispiel für Bandbeschichtungslinien mit Trocknungsöfen, Glühlinien mit Glühöfen oder auch dann, wenn der erforderliche Bandzug die Festigkeit einer Klebeverbindung überschreitet. - Bei Stanzverbindungen können im Zuge des Stanzens durch die Schneidspalte der beiden Stanzwerkzeuge bedingte Grate oder lose bzw. noch leicht mit den Bändern verbundene Flitterpartikel entstehen. Während die Bänder eine Bandprozesslinie durchlaufen und dabei Prozesslinienrollen umlaufen, können Grate oder Flitterpartikel abbrechen und an den Prozesslinienrollen haften bleiben, insbesondere dann, wenn es sich um kunststoffbeschichtete Rollen handelt. Es besteht dann die Gefahr, dass die Grate oder Flitterpartikel bei jeder Rollenumdrehung einen Eindruck auf der Bandoberfläche und folglich nicht akzeptable Produktfehler erzeugen. Um das zu verhindern ist es bekannt, Stanzverbindungen manuell oder maschinell mit einem temperaturbeständigen Klebeband zu umwickeln. Dabei wird der Anfang des Klebebandes auf eine Stelle der Bandverbindung gedrückt, das Klebeband von einer Klebebandrolle abgewickelt, die Bandverbindung umwickelt und schließlich das Klebeband zur Trennung von der Klebebandrolle durchschnitten. Die Breite der Abklebung wird so gewählt, dass die beiden Bandenden mit überklebt werden, so dass keine Grate oder Partikel austreten und an Prozesslinienrollen haften bleiben können. Im Falle zweier Bandenden mit unterschiedlicher Bandbreite ist es erforderlich, zunächst die überstehenden Bandecken durch Seitenstanzen (Notchen) zu entfernen, da anderenfalls die Bandecken beim Überkleben umknicken können, insbesondere wenn es sich um verhältnismäßig dünne Metallbänder handelt. - Ein wesentlicher Nachteil des Umwickelns von Bandverbindungen mit Klebeband ist in der dafür erforderlichen Zeit zu sehen. Diese kann je nach Bandbreite ca. 30 bis 45 Sekunden im Falle maschineller Bandumwicklung und ca. 2 bis 3 Minuten im Falle manueller Bandumwicklung betragen. In einer kontinuierlichen Bandprozesslinie wird die Bundwechselzeit im Einlaufteil durch einen Bandspeicher überbrückt, so dass das Band während des einlaufseitigen Bundwechsels in der Bandprozesslinie weiterlaufen kann. Die Umwickelzeit ist der Bundwechselzeit zuzuschlagen. Das bedeutet, dass der Bandspeicher erheblich größer ausgeführt werden muss. Bei Bandprozesslinien mit einem bereits vorhandenen und auf Bundwechsel abgestimmten Bandspeicher ist deshalb eine Nachrüstung für die Umwicklung von Bandverbindungen nicht möglich.

Im Übrigen ist es bekannt, Metallbandenden miteinander zu verbinden, bevor die Metallbänder in einen Glühofen einlaufen. Nach Durchlaufen des Glühofens kann auf die Ober- und Unterseite des Metallbandes eine Schutzfolie aufgebracht werden (vergleiche JP 07132322 (Patent Abstract of Japan)).

Außerdem ist eine Vorrichtung gemäss Oberbegriff des Anspruchs 7 zum Aufbringen von Klebeband mittels oberem und unterem Pressbalken bekannt (vergleiche JP 02241616 (Patent Abstract of Japan)).

Der Erfindung liegt die Aufgabe zugrunde, ein Verfahren der eingangs beschriebenen Ausführungsform zu schaffen, wonach sich das Abkleben von Bandverbindungen in besonders zeitsparender Weise durchführen lässt. Darüber hinaus soll ein Klebebandapplikator geschaffen werden, der sich durch eine besonders einfache und funktionsgerechte Bauweise auszeichnet, welche ein schnelles Abkleben von Bandverbindungen gewährleistet.

Diese Aufgabe wird im Rahmen der Erfindung gelöst durch ein Verfahren zum Abkleben einer als Stanzverbindung ausgebildeten Bandverbindung von zwei miteinander mittels Stanzens verbundenen Metallbandenden mit ungleicher Bandbreite, wobei die Oberseite und Unterseite der Bandverbindung mittels jeweils eine Klebebandabschnittes überklebt wird, wobei die Länge der beiden Klebebandabschnitte im Wesentlichen der Breite des breiteren Metallbandendes entspricht. - Diese Maßnahmen der Erfindung haben zunächst einmal zur Folge, dass nunmehr auf das zeitraubende Umwickeln der Bandverbindungen mit Klebeband verzichtet wird, sondern lediglich zwei Klebebandabschnitte auf jeweils Oberseite und Unterseite der betreffenden Bandverbindung aufgedrückt werden. Das kann in manueller und maschineller Weise erfolgen und gelingt jedenfalls in einer verhältnismäßig kurzen Zeit von wenigen Sekunden. Denn nach Lehre der Erfindung lassen sich die Klebebandabschnitte z. B. mittels eines Klebebandapplikators mit sich gegenüberliegenden Pressbalken auf die Oberseite und Unterseite der Bandverbindung aufdrücken. Die Zeit für das Abkleben der betreffenden Bandverbindung ist im Rahmen der Erfindung praktisch nur noch durch das Schließen und nachfolgende Öffnen der Pressbalken bestimmt und beträgt z. B. lediglich 3 bis 4 Sekunden. Aus diesem Grunde ermöglicht das erfindungsgemäße Verfahren die kostengünstige Nachrüstung einer Abklebung von Bandverbindungen auch in bereits vorhandenen Bandprozesslinien unter Einsatz eines solchen Klebebandapplikators.

Weitere vorteilhafte Merkmale sind im Folgenden aufgeführt. So lassen sich die Klebebandabschnitte mittels Vakuumbeaufschlagung und/oder einer leicht adhäsiven Rückseite und/oder mittels endseitiger verhältnismäßig kurzer Klebestreifen an den Pressbalken für den Abklebevorgang fixieren. Im Falle einer leicht adhäsiven Rückseite der Klebebandabschnitte ist sichergestellt, dass die klebende und dem Pressbalken abgewandte Klebebandseite der Bandverbindung zugewandt ist und im Zuge des Aufdrückens auf die Bandverbindung derart stark haftet, dass sich die leicht adhäsive Rückseite von dem betreffenden Pressbalken löst. Sofern mit Vakuumbeaufschlagung und/oder Klebestreifen zum Fixieren der Klebebandabschnitte gearbeitet wird, werden diese mit ihrer nichtklebenden Seite an den Pressbalken fixiert. - Ferner besteht die Möglichkeit, die Bandverbindung nach dem Abkleben in eine Seitenstanze vorzutakten und dort seitlich zu beschneiden, wenn das im Falle unterschiedlicher Bandbreiten der beiden Bandenden oder nicht ganz bündig übereinander liegender Bandenden erforderlich wird. Denn dann wird die Bandverbindung auf beiden Seiten ausgestanzt, so dass keine überstehenden Ecken beim Bandlauf durch die Bandprozesslinie stören. Dabei werden auch eventuell überstehende Klebebandstücke mit abgeschnitten. Da es sich bei der Bandverbindung um eine Stanzverbindung handelt, können sich über die Bandbreite betrachtet kleine Abstände zwischen den Stanzungen befinden. Für diesen Fall sieht die Erfindung vor, dass das seitliche Beschneiden einer als Stanzverbindung ausgeführten Bandverbindung zwischen diesen Stanzungen vorgenommen wird. Dazu kann die Seitenstanze auf eine entsprechende Stanzbreite eingestellt werden. Auf diese Weise wird vermieden, die Stanzungen anzuschneiden, was zu Rollenbeschädigungen führen könnte.

Gegenstand der Erfindung ist auch ein Klebebandapplikator zur Durchführung des beanspruchten Verfahrens, der sich durch eine besonders einfache und funktionsgerechte Bauweise auszeichnet. Dieser Klebebandapplikator weist zwei Pressbalken zur vorübergehenden Fixierung von Klebebandabschnitten auf, wobei entweder beide Pressbalken gegen die abzuklebende Bandverbindung verfahrbar sind oder zumindest einer der beiden Pressbalken gegen die auf dem anderen Pressbalken aufliegende oder dagegen anliegende Bandverbindung verfahrbar ist, wobei die Pressbalken zum Aufbringen von Klebebandabschnitten seitlich aus dem Klebebandapplikator aus- und einfahrbar sind und wobei zumindest der obere Pressbalken im ausgefahrenen Zustand 180° um seine Längsachse verschwenkbar gelagert ist. Der Klebebandapplikator weist einen oberen und einen unteren Pressbalken dann auf, wenn der eine oder beide Pressbalken gegen die abzuklebende Bandverbindung in vertikaler Richtung verfahrbar sind. Das ist bei Bandprozesslinien mit durchlaufenden Bändern regelmäßig der Fall. Im Rahmen der Erfindung ist aber auch ein Klebebandapplikator mit horizontal verfahrbaren Pressbalken denkbar. Die Pressbalken weisen vorzugsweise eine nachgiebige, z. B. elastische Oberfläche aus z. B. Polyurethan auf und werden zum Abkleben einer Bandverbindung zusammengefahren und aufeinandergepresst. Dadurch lösen sich die beiden Klebebandabschnitte von den Pressbalken und bleiben an der Bandverbindung haften. Anschließend öffnet der Klebebandapplikator, so dass das Band dann durch die Bandprozesslinie transportiert werden kann. Erfindungsgemäß sind die Pressbalken zum Aufbringen von Klebebandabschnitten seitlich aus dem Klebebandapplikator aus- und einfahrbar. So werden in der Zeit zwischen zwei Bundwechseln die Pressbalken seitlich aus dem Klebebandapplikator auf bedienseitige Führungsbahnen herausgeschoben bzw. -gefahren, z. B. mittels Pneumatik- oder Hydraulikzylinder, aber auch ein Zahnstangentrieb ist denkbar. Danach können neue Klebebandabschnitte außerhalb der Bandprozesslinie auf die Pressbalken aufgebracht werden, und zwar entweder manuell oder maschinell. In diesem Zusammenhang sieht die Erfindung vor, dass zumindest der obere Pressbalken im ausgefahrenen Zustand 180° um seine Längsachse verschwenkt bzw. verdreht werden kann, so dass die Klebebandabschnitte von oben aufgebracht werden können. Nachdem die Pressbalken wieder mit Klebebandabschnitten bestückt worden sind, werden sie in den Klebebandapplikator zurückgefahren bzw. -gezogen. Der Klebebandapplikator ist dann für das Abkleben der nächsten Bandverbindung bereit.

Im Rahmen der Erfindung besteht auch die Möglichkeit, dass der Klebebandapplikator während des Abklebevorgangs in Bandlaufrichtung synchron mit der Bandgeschwindigkeit auf z. B. einem Verfahrschlitten verfahrbar und nach dem Abklebevorgang in seine Ausgangsstellung zurückfahrbar ist, um den Klebebandapplikator auch bei durchlaufendem und sich folglich bewegendem Band einsetzen zu können. Anstelle von zwei vertikal anstellbaren Pressbalken ist es auch möglich, nur einen der beiden Pressbalken, z. B. den oberen Pressbalken vertikal anstellbar und den anderen unteren Pressbalken ortsfest auszubilden oder umgekehrt. In diesem Fall sind die verbundenen Bänder mit der Bandverbindung über anstellbare z. B. höheneinstellbare Prozesslinienrollen von dem ortfesten Pressbalken abhebbar, werden also für den normalen Bandlauf angehoben.

Im Folgenden wird die Erfindung anhand einer lediglich ein Ausführungsbeispiel darstellenden Zeichnung näher erläutert. Es zeigen:

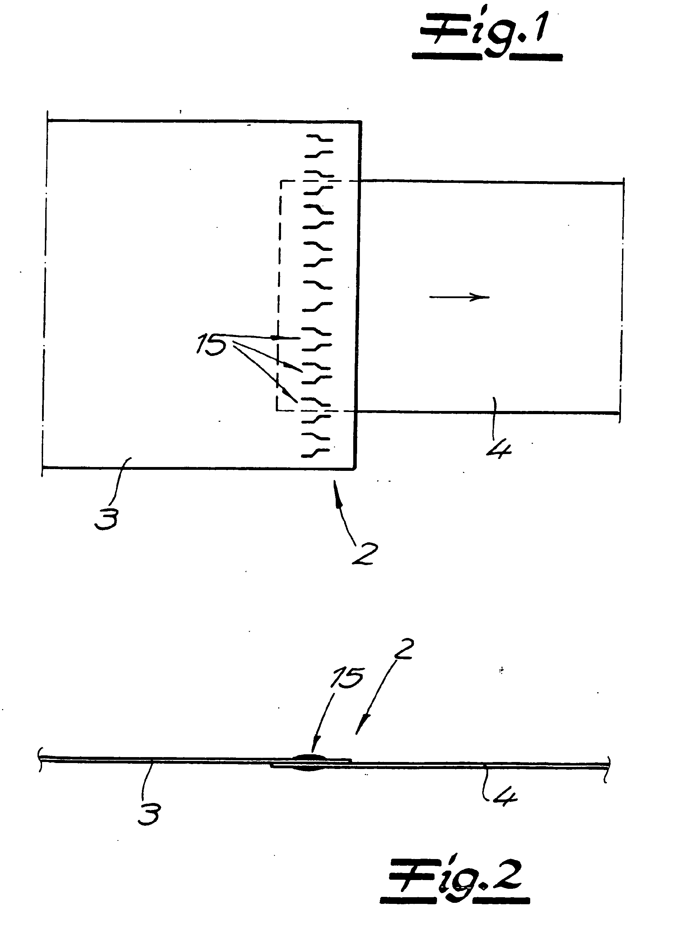

- Fig. 1: eine Bandverbindung in der Ausführungsform einer Stanzverbindung von zwei unterschiedlich breiten Bandenden in Draufsicht,
- Fig. 2: den Gegenstand nach Fig. 1 in Seitenansicht,

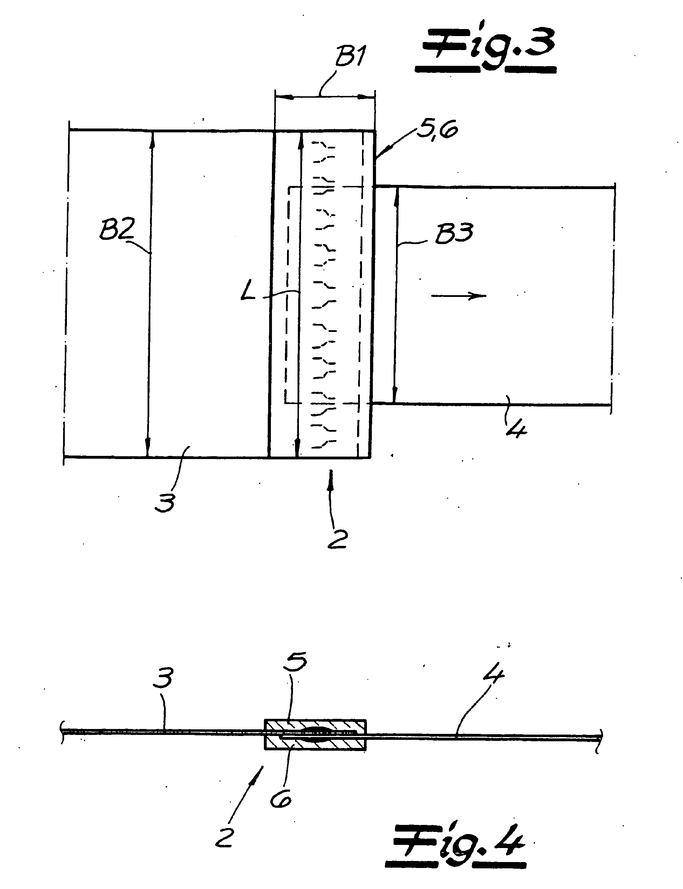

- Fig. 3: den Gegenstand nach Fig. 1 nach dem oberseitigen und unterseitigen Abkleben mit Klebebandabschnitten,
- Fig. 4: eine Seitenansicht auf den Gegenstand nach Fig. 3,

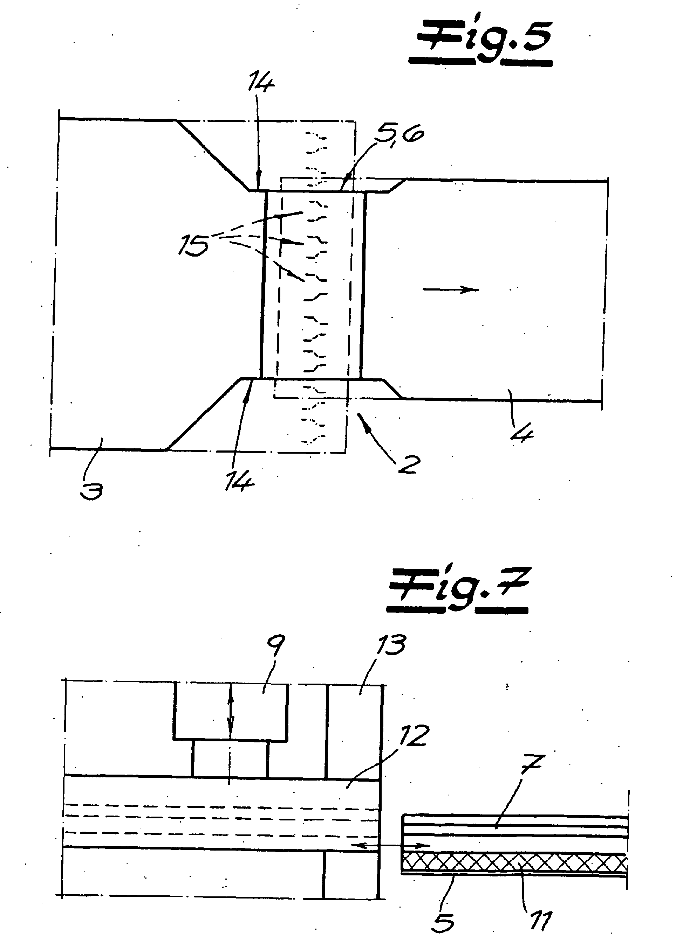

- Fig. 5: den Gegenstand nach Fig. 3 mit seitlichen Ausstanzungen im Bereich der Bandverbindung,

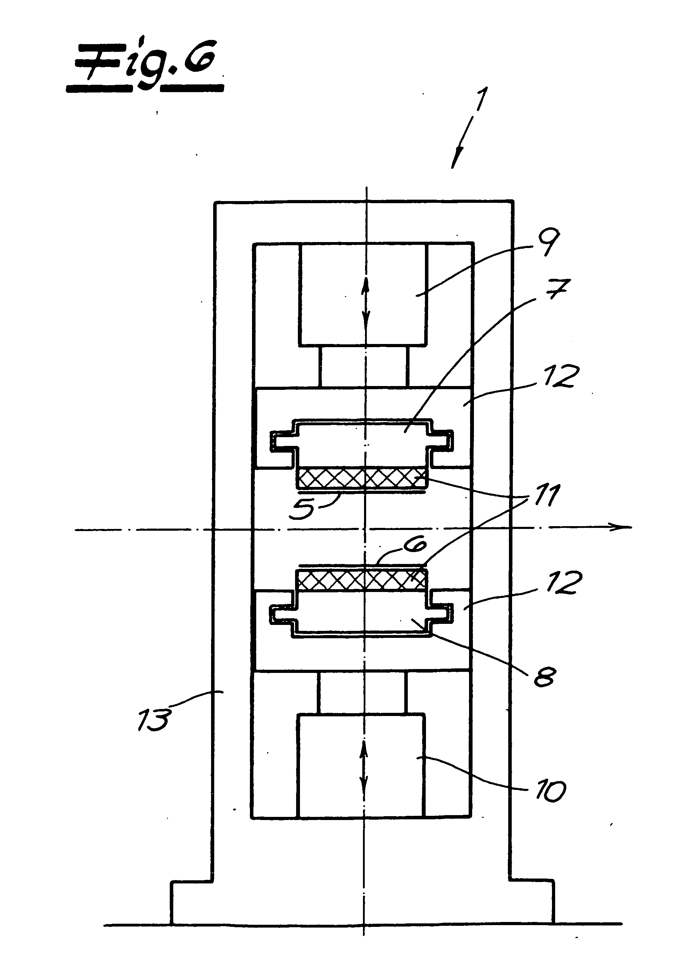

- Fig. 6: einen Klebebandapplikator in schematischer Seitenansicht und
- Fig. 7: den Gegenstand nach Fig. 6 ausschnittsweise im Bereich eines seitlich herausgefahrenen Pressbalkens in Frontansicht.

In den Figuren ist ein Klebebandapplikator 1 zum Abkleben einer Bandverbindung 2 dargestellt, wobei die Bandverbindung als Stanzverbindung ausgebildet ist. Die Metallbandenden sind mit Klebeband vorgegebener Breite B1 abgeklebt. Die Oberseite und Unterseite der Bandverbindung 2 ist mittels jeweils eines Klebebandabschnittes 5, 6 überklebt, wobei die Länge L der beiden Klebebandabschnitte 5, 6 im Wesentlichen der Breite B2, B3 der Bandenden 3, 4 bzw. nach dem Ausführungsbeispiel der Breite B2 des breiteren Bandendes 3 entspricht. Der Klebebandapplikator 1 weist zwei Pressbalken 7, 8 zur vorübergehenden Fixierung solcher Klebebandabschnitte 5, 6 auf, wobei nach dem Ausführungsbeispiel beide Pressbalken 7, 8 gegen die abzuklebende Bandverbindung 2 verfahrbar sind. Beide Pressbalken 7, 8 sind gegen die abzuklebende Bandverbindung 2 in vertikaler Richtung verfahrbar, und zwar mittels pneumatischer oder hydraulischer Zylinderkolbenanordnungen 9, 10. Die Pressbalken 7, 8 weisen eine nachgiebige, z. B. elastische Oberfläche 11 aus Kunststoff wie Polyurethan auf und sind zum Aufbringen von Klebebandabschnitten 5, 6 seitlich aus dem Klebebandapplikator 1 aus- und einfahrbar. Zumindest der obere Pressbalken 7 ist im ausgefahrenen Zustand um 180° um seine Längsachse verschwenkbar bzw. drehbar gelagert, um die Klebebandabschnitte 5 von oben aufbringen zu können. - Die Pressbalken 7, 8 sind in Führungsschlitten 12 seitlich und folglich quer zur Bandlaufrichtung aus- und einfahrbar geführt, welche ihrerseits in einem gleichsam Pressengestell 13 in vertikaler Richtung geführt und mittels der pneumatischen oder hydraulischen Zylinderkolbenanordnungen 9, 10 mit den Pressbalken 7, 8 hoch und gegen das durchlaufende Band bzw. die jeweilige Bandverbindung 2 niederfahrbar sind. Die Klebebandabschnitte 5, 6 sind mittels Vakuumbeaufschlagung über die Pressbalken 7, 8 und/oder einer leicht adhäsiven Rückseite und/oder mittels endseitiger nicht gezeigter Klebestreifen an den Pressbalken 7, 8 für den Abklebevorgang vorübergehend fixierbar. Bei einer Bandverbindung 2 mit ungleich breiten Bändern wird diese Bandverbindung nach dem Abkleben in eine Seitenstanze vorgetaktet und seitlich beschnitten, so dass Ausstanzungen 14 entstehen. Das seitliche Beschneiden einer als Stanzverbindung 2 dargestellten Bandverbindung wird zwischen den Stanzungen 15 vorgenommen.

## Patentansprüche

1. Verfahren zum Abkleben einer als Stanzverbindung ausgebildeten Bandverbindung von zwei miteinander mittels Stanzens verbundenen Metallbandenden mit ungleicher Bandbreite, wobei die Oberseite und Unterseite der Bandverbindung mittels jeweils eines Klebebandabschnittes überklebt wird, wobei die Länge der beiden Klebebandabschnitte im Wesentlichen der Breite des breiteren Metallbandendes entspricht.

2. Verfahren nach Anspruch 1, **dadurch gekennzeichnet, dass** die Klebebandabschnitte mittels eines Klebebandapplikators mit sich gegenüberliegenden Pressbalken auf die Oberseite und Unterseite der Bandverbindung aufdrückbar sind.

3. Verfahren nach Anspruch 1 oder 2, **dadurch gekennzeichnet, dass** die Klebebandabschnitte mit ihrer nichtklebenden Seite an den Pressbalken vorübergehend fixiert werden.

4. Verfahren nach einem der Ansprüche 1 bis 3, **dadurch gekennzeichnet, dass** die Klebebandabschnitte mittels Vakuumbeaufschlagung und/oder einer leicht adhäsiven Rückseite und/oder endseitiger Klebestreifen an den Pressbalken für den Abklebevorgang vorübergehend fixierbar sind.

5. Verfahren nach einem der Ansprüche 1 bis 4, **dadurch gekennzeichnet, dass** die Bandverbindung nach dem Abkleben in eine Seitenstanze vorgetaktet und seitlich beschnitten wird.

6. Verfahren nach Anspruch 5, **dadurch gekennzeichnet, dass** das seitliche Beschneiden zwischen den Stanzungen vorgenommen wird.

7. Klebebandapplikator zur Durchführung des Verfahrens nach einem der Ansprüche 1 bis 6, mit zwei Pressbalken (7, 8) zur vorübergehenden Fixierung von Klebebandabschnitten (5, 6), wobei beide Pressbalken (7, 8) gegen die abzuklebende Bandverbindung (2) verfahrbar sind oder zumindest einer der beiden Pressbalken (7) gegen die auf dem anderen Pressbalken (8) aufliegende oder dagegen anliegende Bandverbindung (2) verfahrbar ist, **dadurch gekennzeichnet, dass** die Pressbalken (7, 8) zum Aufbringen von Klebebandabschnitten (5,6) seitlich aus dem Klebebandapplikator (1) aus- und einfahrbar sind und dass zumindest der obere Pressbalken (7) im ausgefahrenen Zustand 180° um seine Längsachse verschwenkbar gelagert ist.

8. Klebebandapplikator nach Anspruch 7, **dadurch gekennzeichnet, dass** der eine oder beide Pressbalken (7, 8) gegen die abzuklebende Bandverbindung (2) in vertikaler Richtung verfahrbar sind.

9. Klebebandapplikator nach Anspruch 7 oder 8, **dadurch gekennzeichnet, dass** die Pressbalken (7, 8) eine nachgiebige, z. B. elastische Oberfläche (11) aus z. B. Kunststoff aufweisen.

10. Klebebandapplikator nach einem der Ansprüche 7 bis 9, **dadurch gekennzeichnet, dass** der Klebebandapplikator (1) während des Abklebevorgangs in Bandlaufrichtung synchron mit der Bandgeschwindigkeit verfahrbar und nach dem Abklebevorgang in seine Ausgangsstellung zurückführbar ist.

## Claims

1. A method for masking a strip connection formed as a stamped connection of two metal strip ends of unequal width which are connected to one another by means of stamping, wherein the upper side and the lower side of the strip connection are stuck over by means of an adhesive tape section in each case, wherein the length of the two adhesive tape sections substantially corresponds to the width of the wider metal strip end.

2. The method according to claim 1, **characterised in that** the adhesive tape sections can be pressed onto the upper side and lower side of the strip connection by means of an adhesive tape applicator with opposing pressing bars.

3. The method according to claim 1 or 2, **characterised in that** the adhesive tape sections are temporarily fixed with their non-adhesive side on the pressing bars.

4. The method according to one of claims 1 to 3, **characterised in that** the adhesive tape sections can be temporarily fixed on the pressing bars for the masking process by means of exposure to vacuum and/or a slightly adhesive back side and/or end-side adhesive strip.

5. The method according to one of claims 1 to 4, **characterised in that** the strip connection is pre-indexed in a side stamp and cut laterally after the masking.

6. The method according to claim 5, **characterised in that** the lateral cutting is carried out between the stampings.

7. An adhesive applicator for carrying out the method according to one of claims 1 to 6, comprising two pressing bars (7, 8) for temporary fixing of the adhesive strip sections (5, 6), wherein both pressing bars (7, 8) can be moved towards the strip connection (2) to be masked or at least one of the pressing bars (7) can be moved towards the strip connection (2) lying on the other pressing bar (8) or bearing thereagainst, **characterised** that the pressing bars (7, 8) for application of adhesive strip sections (5, 6) can be withdrawn and retracted laterally from the adhesive strip applicator (1) and at least the upper pressing bar (7) in the withdrawn state can be mounted so that it is pivotable through 180° about its longitudinal axis.

8. The adhesive applicator according to claim 7, **characterised in that** the one or both pressing bars (7, 8) can be moved in the vertical direction towards the strip connection (2) to be masked.

9. The adhesive applicator according to claim 7 or 8, **characterised in that** the pressing bars (7, 8) have a resilient, e.g. elastic surface (11), for example, made of plastic.

10. The adhesive applicator according to one of claims 7 to 9, **characterised in that** during the masking process the adhesive tape applicator (1) can be moved in the strip running direction synchronously with the strip speed and can be retracted into its initial position after the masking process.

## Revendications

1. Procédé de collage d'une bande de liaison réalisée comme une liaison découpée à l'emporte-pièce de deux extrémités de bandes de métal à largeur de bande inégale reliées l'une à l'autre au moyen d'un emporte-pièce, moyennant quoi la face supérieure et la face inférieure de la bande de liaison sont collées l'une par-dessus l'autre au moyen d'un segment de bande de colle respectif, moyennant quoi la longueur des deux segments de bande de colle correspond essentiellement à la largeur de l'extrémité de bande de métal plus large.

2. Procédé selon la revendication 1, **caractérisé en ce que** les segments de bande de colle peuvent être pressés au moyen d'un applicateur de bande de colle avec des mâchoires de pressage disposées en vis-à-vis sur la face supérieure et la face inférieure de la bande de liaison.

3. Procédé selon la revendication 1 ou 2, **caractérisé en ce que** les segments de bande de colle sont fixés au préalable sur les mâchoires de pressage par leurs faces non adhésives.

4. Procédé selon une des revendications 1 à 3, **caractérisé en ce que** les segments de bande de colle peuvent être fixés au préalable au moyen d'une sollicitation par du vide et/ou d'une face arrière faiblement adhésive et/ou de bandes de colle aux extrémités sur les mâchoires de pressage en vue du processus de collage.

5. Procédé selon une des revendications 1 à 4, **caractérisé en ce que** la bande de liaison est présynchronisée après le collage dans un emporte-pièce latéral et est rognée latéralement.

6. Procédé selon la revendication 5, **caractérisé en ce que** le rognage latéral est entrepris entre les découpages à l'emporte-pièce.

7. Applicateur de bandes de colle pour mettre en oeuvre le procédé selon une des revendications 1 à 6, comportant deux mâchoires de pressage (7, 8) pour la fixation préalable de segments de bandes de colle (5, 6), moyennant quoi les deux mâchoires de serrage (7, 8) peuvent être déplacées contre la bande de liaison (2) à coller ou au moins une des deux mâchoires de pressage (7) peut être déplacée contre la bande de liaison (2) reposant sur ou à côté de l'autre mâchoire de pressage (8), les mâchoires de pressage (7, 8) peuvent être déployées et rétractées afin d'appliquer latéralement des segments de bandes de colle (5, 6) sortant de l'applicateur de bandes de colle (1) et au moins la mâchoire de pressage (7) supérieure est positionnée dans l'état déployé à 180° de manière à pivoter autour de son axe longitudinal.

8. Applicateur de bandes de colle selon la revendication 7, **caractérisé en ce que** une ou les deux mâchoires de pressage (7, 8) peuvent être déplacées dans la direction verticale contre la bande de liaison (2) à coller.

9. Applicateur de bandes de liaison selon la revendication 7 ou 8, **caractérisé en ce que** les mâchoires de pressage (7, 8) présentent une surface (11) flexible, par exemple élastique, par exemple en plastique.

10. Applicateur de bandes de colle selon une des revendications 7 à 9, **caractérisé en ce que** l'applicateur de bandes de colle (1) peut être déplacé pendant le processus de collage de manière synchronisée à la vitesse de la bande dans la direction de marche de la bande et peut être ramenée dans sa position de sortie après le processus de collage.
